(19) Europäisches Patentamt
European Patent Office
Office européen des brevets

(11) Publication number: 0 218 640 B1

(12) EUROPEAN PATENT SPECIFICATION

(45) Date of publication of patent specification: 03.10.90

(51) Int. Cl.$^5$: C 08 J 9/14, C 08 J 9/30, B 29 C 67/22

(21) Application number: 86902227.7

(22) Date of filing: 26.03.86

(86) International application number: PCT/US86/00589

(87) International publication number: WO 86/06084 23.10.86 Gazette 86/23

# (54) METHOD FOR THE PREPARATION OF STYRENE POLYMER FOAM AND FOAM PREPARED THEREBY.

(30) Priority: 12.04.85 US 722877

(43) Date of publication of application: 22.04.87 Bulletin 87/17

(45) Publication of the grant of the patent: 03.10.90 Bulletin 90/40

(84) Designated Contracting States: AT BE CH DE FR GB IT LI NL SE

(56) References cited:
EP-A-0 081 005
US-A-2 409 910
US-A-2 669 751
US-A-3 014 702
US-A-3 583 678
US-A-3 751 377
US-A-3 817 669
US-A-3 960 792
US-A-3 966 381
US-A-4 146 563
US-A-4 312 910
US-A-4 344 710
US-A-4 393 016
US-A-4 424 287
US-A-4 451 417
US-A-4 486 550

(73) Proprietor: THE DOW CHEMICAL COMPANY
2030 Dow Center Abbott Road P.O. Box 1967
Midland Michigan 48640-1967 (US)

(72) Inventor: SUH, Kyung, W.
1533 Welsh Hills Road
Granville, OH 43023 (US)
Inventor: KENNEDY, John, M.
Route 3, Box 349
Wheelersburg, OH 45694 (US)

(74) Representative: Sternagel, Hans-Günther, Dr. et al
Patentanwälte Dr. Michael Hann Dr. H.-G. Sternagel Sander Aue 30
D-5060 Bergisch Gladbach 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 218 640 B1

## Description

This invention relates generally to extruded styrene polymer foams. More particularly it relates to the use of a mixed blowing agent of carbon dioxide plus ethyl chloride and optionally certain specific fluorocarbons.

The variety of styrene polymer foams contemplated within the scope of this invention are the so-called "extruded foams". Such extruded foams have a fairly uniform cell size when compared to the so-called "molded bead foams".

One of the larger applications for extruded styrene polymer foams is in the field of thermal insulation. Styrene polymer foam that is suitable for thermal insulation desirably has relatively small cells and good dimensional stability. It is also desirable that the insulating value of the foam be maintained for as long a period as possible.

Extruded foams are also employed in the so-called decorative field wherein a foam plank may be cut into a "decorative foam" and be used as is or else used as a base for further decorative material. Particularly desirable stable styrene polymer foam can often be obtained by employing the method set forth in US—A—3,960,792 to M. Nakamura. For many years, styrene polymer foams have been extruded employing methyl chloride alone as the blowing agent or a mixture of methyl chloride with chlorofluorocarbons. Generally the products of these processes must be aged for a period of time to permit the methyl chloride to leave the cells and air to enter by an appropriate diffusion process through the cell walls. Also, in foams employing methyl chloride as the total blowing agent or as a partial blowing agent, the period of aging for thicker extruded boards and planks can present an inconvenient warehousing problem. Also, due to the undesirable physical characteristics of methyl chloride, caution and good ventilation are utilized when such foams are stored or cut to shape.

Styrene polymer foam has been prepared using ethyl chloride as a significant component of the blowing agent. Such foam preparation is set forth in US—A—4,393,016. An alternative blowing agent system utilizing carbon dioxide and an alkane is set forth in US—A—4,344,710 and 4,424,287:

EP—A—081 005 refers to the use of inorganic compounds such as sodium, magnesium, zinc or ammonium carbonate or bicarbonate either lone or in combination with volatile fluid foaming agents such as ethyl chloride or trichlorofluoromethane for extrusion foaming or alkenyl aromatic-olefinically unsaturated acid copolymers.

From US—A—4,451,417 the use of a mixture consisting of 50 to 80 percent by weight of dichlorodifluoromethane and 50 to 20 percent by weight of ethylchloride as volatile blowing agent for extrusion foaming of polystyrene is known.

US—A—4,312,910 discloses the use of several mixtures of volatile fluids as blowing agent for extrusion foaming styrene-acrylic acid copolymers.

It would be desirable if there were available an improved process for the preparation of alkenyl aromatic polymer foam which used blowing agents that are more environmentally acceptable than methyl chloride; which are capable of making insulating foam over a wide range of densities as well as decorative foam; and which could be used on existing equipment without modification to very high pressure operation.

A process for the preparation of an extruded alkenyl aromatic thermoplastic resinous elongated foam body, the body defining a plurality of closed non-interconnecting gas-containing primary cells therein, the steps of the method including

(1) heat-plastifying an alkenyl aromatic synthetic resinous material

(2) adding to and mixing with the heat plastified synthetic resinous material an amount of 3 to 18 parts per 100 parts of resinous material a fluid blowing agent mixture comprising as a volatile fluid foaming agent ethyl-chloride and/or a fluorocarbon member such as dichlorodifluoromethane to provide a blowable foaming agent resinous polymer mixture under a pressure sufficiently high that foaming is prevented,

(3) reducing the temperature of the mixture to a temperature such that when pressure is removed therefrom, a foam of desirable quality is obtained,

(4) reducing the pressure on the mixture to thereby cause the mixture to form a foam of desired quality characterized by employing a blowing agent mixture of from 3 to 45 weight percent fluid carbon dioxide, from 5 to 97 weight percent ethyl chloride and from 0 to 90 weight percent of a fluorocarbon member selected from the group consisting of dichlorodifluoromethane, 1-chloro-1,1-difluoroethane and mixtures thereof.

Also contemplated within the scope of the present invention is a synthetic resinous thermoplastic foam prepared in accordance with the hereinbefore described method wherein an alkenyl aromatic thermoplastic synthetic resinous elongate foam body having a machine direction and a transverse direction, the body defining a plurality of closed noninterconnecting gas-containing cells therein, with the further limitation that the cells contain at least residual vaporized blowing agent hereinbefore described.

By the term "alkenyl aromatic synthetic resin" is meant a solid polymer of one or more polymerizable

alkenyl aromatic compounds. The polymer or copolymer comprises in chemically combined form, at least 75 percent by weight of at least one alkenyl aromatic compound having the general formula

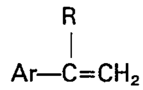

wherein Ar represents an aromatic hydrocarbon radical, or an aromatic halo-hydrocarbon radical of the benzene series, and R is hydrogen or the methyl radical. Examples of such alkenyl aromatic resins are the solid homopolymer of styrene, a-methylstyrene, o-methylstyrene, m-methylstyrene, p-methylstyrene, ar-ethylstyrene, ar-vinylxylene, ar-chlorostyrene or ar-bromostyrene; the solid copolymers of two or more of such alkenyl aromatic compounds with minor amounts of other readily polymerizable olefinic compounds such as methylmethacrylate, acrylonitrile, maleic anhydride, citraconic anhydride, itaconic anhydride, acrylic acid, rubber reinforced (either natural or synthetic) styrene polymers, etc.

Blowing agents useful in the practice of the present invention of commercial purity are generally satisfactory. In the practice of the present invention, carbon dioxide is generally employed in the proportions of from 3—45 weight percent of total blowing agent whereas ethyl chloride is employed at a level of 5—97 weight percent, preferably at a level of 19—97 weight percent, and the dichlorodifluoromethane or 1,1,1-chlorodifluoroethane is employed from 0—90 weight percent of the total weight of the total blowing agent component. In the preparation of foams particularly suitable for thermal insulation, carbon dioxide is employed at a level of from 3—25 weight percent of the total blowing agent whereas ethyl chloride is employed at a level of 5—60 weight percent, preferably at a level of 20—60 weight percent, and the chlorofluorocarbons are employed at a level of 30—90 weight percent. The dichlorodifluoromethane or chlorodifluoroethane, or a mixture of each, may be utilized. In the event that it is desired to prepare foam particularly suitable for decorative applications, that is, a large cell foam that is readily cut and machined to desired configurations, carbon dioxide is employed at a level of from 3—45 weight percent, ethyl chloride at a level of from 60—97 weight percent and the chlorofluorocarbon component from 0—25 weight percent. The blowing agent mixture may be supplied to the alkenyl aromatic resin in any conventional manner. For example, a mixture of the desired composition of blowing agent may be directly injected into a heat plastifying and mixing apparatus such as an extruder, and the components of the mixture may be separately injected into the heat-plastified resin.

Alternatively alkenyl aromatic resinous particles may be treated in a pressure vessel and the blowing agent mixture impregnated into the particles at ambient or elevated temperature.

Generally, the preparation of alkenyl aromatic resinous polymer foams in accordance with the present invention is conveniently done in a manner generally shown and described in US—A—2,669,751, wherein the volatile fluid foaming agent is injected into a heat-plastified polymer stream within an extruder. From the extruder the heat-plastified gel is passed into a mixer, the mixer being a rotary mixer wherein a studded rotor is enclosed within a housing which has a studded internal surface which intermeshes with the studs on the rotor. The heat-plastified gel from the extruder is fed into the inlet end of the mixer and discharged from the outlet end, the flow being in a generally axial direction. From the mixer, the gel passes through coolers such as are described in US—A—2,669,751 and from the coolers to a die which extrudes a generally rectangular board. A suitable extrusion system is shown in US—A—3,966,381.

In the preparation of foams in accordance with the present invention, it is often desirable to add a nucleating agent to reduce the primary cell size. Talc, calcium silicate, indigo, and the like are suitable agents which reduce primary cell size.

Various other additives may be utilized, such as fire retardant chemicals, stabilizers and the like.

In the preparation of foams in accordance with the present invention, the blowing agent may be added to the resin in any convenient manner. Generally the blowing agent mixture is pumped into heat plastified alkenyl aromatic resin and admixed therewith prior to extrusion to form foam. The blowing agents may be admixed and pumped as a combination stream into the heat plastified resin, or they may be supplied as separate streams. Adequate mixing of the blowing agents into the heat plastified resin is required in order to obtain a product of desirable uniformity. Such mixing may be accomplished by a variety of means including rotary mixers such as extruders, so-called static mixers or interfacial surface generators, such as are utilized in US—A—3,751,377 and 3,817,669.

Examples of the invention and Comparative Examples are given below. It should be noted that the Comparative Examples are not prior art. Further, the Examples are illustrative only, and should not be construed as limiting the invention.

The following abbreviations are employed in the examples that follow:

| | | | |
|---|---|---|---|
| pcf | pounds per cubic foot | EtCl | Ethyl chloride |
| $kg/m^3$ | kilograms per cubic meter | | |
| mm | millimeters | FC—12 | Dichlorodifluoromethane |
| Vert | Vertical or thickness, compression strength | FC—142b | 1,1,1-Chlorodifluoroethane |
| Horiz | Horizontal or width, compression strength | °C | Centigrade |
| Ext | Extrusion or longitudinal direction | °F | Fahrenheit |
| psi | pounds per square inch | RH | Relative Humidity |
| Pa | Pascal | | |
| tin | inch | lbs | pounds |
| $in^2$ | square inches | $ft^2$ | square feet |
| pph | parts per hundred | hr | hour |
| (c) | Comparative Example | BTU | British Thermal Units |
| $CO_2$ | Carbon Dioxide | | |

Example 1

A styrene polymer foam was prepared utilizing a 6,35 cm (2½ inch) diameter extruder which fed a rotary mixer generally of the configuration disclosed in US—A—2,669,751. The rotary mixer discharge was passed through three heat exchangers of the variety shown in US—A—3,014,702. The discharge from the heat exchangers was in turn passed through a plurality of interfacial surface generators or static mixers of the type shown in US—A—3,583,678. The discharge from the static mixers was passed to a slot die.

Foam was discharged from the slot die at a rate of 90,7 kg (200 pounds) per hour. Three experimental foams were prepared; one in accordance with the present invention. The results are set forth in Table I.

TABLE I
Effect of Blowing Agent Type on Skin Quality and Compressive Strength

| Blowing Agent | Pressure Pa (psi) | Density (pcf) kg/m$^3$ | Surface* Quality | Fresh Compressive Strength Pa (psi) | | |
|---|---|---|---|---|---|---|
| | | | | Vert | Horiz | Ext |
| 6.8 pph $CO_2$[(c)] | $12.41 \cdot 10^6$ (1800) | 65.3 (4.03) | 5 | 158.5 | 97.6 | $48 \times 10^4$ (69.8) |
| 4.0 pph $CO_2$ (40%) 6.0 pph EtCl (60%) | $6.89 \cdot 10^6$ (1000) | 34.7 (2.14) | 1 | 44.2 | 26.5 | $16 \times 10^4$ (23.5) |
| 11.3 pph EtCl[(c)] | $2.20 \cdot 10^6$ (320) | 37.1 (2.29) | 1 | 12.6 | 23.3 | $9.8 \times 10^4$ (14.2) |

* The skin quality is a measure of surface smoothness. The sample is visually assigned a value between 1 and 5 according to surface smoothness, one being the smoothest.
[(c)] Comparative Example.

The foregoing table shows that the addition of $CO_2$ to EtCl reduces the density at about equivalent number of moles of blowing agent and increases the compressive strength considerably even at lower foam density.

The resultant foam obtained with the mixture of carbon dixide and ethyl chloride was a large cell foam suitable for decorative processes.

Example 2

The general procedure of Example 1 was repeated with the exception that a foam suitable for insulation was obtained. Extrudates were also made for comparative purposes. The results are set forth in Table II.

TABLE II

Effect of Blowing Agent Type on Surface Quality*

| Blowing Agent | Die Pressure Pa (psi) | Cell Size (mm) | Density kg/m³ (pcf) | Cross-section cm² (in²) | Surface** Quality | Fresh k-factor | 5 yr*** k-factor |
|---|---|---|---|---|---|---|---|
| 6.8 pph $CO_2$[(c)] | $12.41 \cdot 10^6$ (1800) | 0.12 | 65.3 (4.03) | 40.8 (6.33) | 5 | 0.212 | 0.279 |
| 5.5 pph $CO_2$/ 5.5 pph FC-12[(c)] | $8.79 \cdot 10^6$ (1275) | 0.10 | 68.7 (4.24) | 40.9 (6.34) | 4 | 0.191 | 0.224 |
| 3.9 pph $CO_2$/ (30%) 4.6 pph FC-142b/ (35%) 4.6 pph EtCl (35%) | $6.72 \cdot 10^6$ (975) | 0.43 | 34.9 (2.15) | 56.5 (8.75) | 1 | 0.208 | 0.212 |

* Typical additive levels include 1.5 pph FR-651P (monochloropentabromo cyclohexane), 0.15 pph barium stearate, and 0.03 pph magnesium oxide. Typically the foaming temperature varies between 106°C and 125°C.

** The sample is visually assigned a value between 1 and 5 according to surface smoothness one being the best and 5 the worst.

*** Fresh k-factor (thermal conductivity) is measured at a mean temperature of 75°F using direct reading heat flow meter apparatus according to ASTM C518. The 5 year k-factor is a calculated value from a computerized mathematical model. The units on k-factor are BTU-in/hr. °F. ft².

(c) Comparative Example.

Table II shows that much larger cell size can be obtained by using carbon dioxide and 1,1,1-chlorodifluoroethane as mixed blowing agent and that the larger the cell size, the lower the density and the larger the cross-section. The smoothness of the foam skin is important for many insulation applications. When carbon dioxide is used in combination with several other blowing agents, the die pressure is reduced. Adding dichlorodifluoromethane improved the skin quality slightly and addition of ethyl chloride to carbon dioxide and dichlorodifluoromethane as mixed blowing agent improved the skin quality considerably as shown in Table II.

Example 3

The general procedure of Example 1 was repeated to form a variety of compositions. The results are set forth in Table III.

TABLE III
Effect of Blowing Agent Type on Compression Strength and Dimensional Stability*

| Thickness mm (inches) | Blowing Agent | Density $kg/m^3$ (pcf) | Cell Size (mm) | Compressive Strength (psi) | | | Ambient Aging Time (Days) | Dimensional Change (%)** after 7 days of exposure to 167°F | | |
|---|---|---|---|---|---|---|---|---|---|---|
| | | | | Vert | Horiz | Ext | | Vert | Horiz | Ext |
| 25.4 (1) | 5.3 pph EtCl/ 8.0 pph FC-12[c] | 33.7 (2.08 | 0.27 | 15.2 | 19.9 | 52.7 | 20 | *4.8* | *2.9* | −0.4 |
| 38.1 (1-1/2) | 5.3 pph EtCl/ 8.0 pph FC-12[c] | 32.9 (2.03) | 0.25 | 19.1 | 18.2 | 35.9 | 20 | *3.2* | *2.2* | 1.2 |
| 50.8 (2) | 5.3 pph EtCl/ 8.0 pph FC-12[c] | 36.0 (2.22) | 0.22 | 40.2 | 26.5 | 28.0 | 10<br>30 | 0.7<br>−0.2 | *10.4*<br>1.6 | 0.9<br>*2.9* |
| 50.8 (2) | 2.0 pph MeCl/ 4.7 pph EtCl/ 6.6 pph FC-12[c] | 35.5 (2.19) | 0.32 | 19.1 | 23.8 | 34.6 | 20 | *4.3* | 1.0 | 1.3 |
| 27.9 (1.1) | 1.5 pph $CO_2$/ 3.5 pph EtCl/ 7.5 pph FC-12 | 30.9 (1.91) | 0.32 | 17.3 | 21.8 | 30.9 | 20 | 0.6 | 1.9 | 0.5 |
| 22.86 (0.9) | 1.5 pph $CO_2$/ 2.5 pph EtCl/ 7.5 pph FC-12 | 35.8 (2.21) | 0.26 | 30.7 | 22.0 | 39.2 | 20 | 0.6 | 1.8 | 0.5 |

* Foaming temperature ranges between 115°C and 126°C; Die pressure ranges between $310 \cdot 10^4$ Pa and $393 \cdot 10^4$ Pa (450 psi and 570 psi); Barium stearate = 0.15—0.2 pph; Magnesium oxide = 0.01—0.04 pph; FR-651P = 1.7—2.0 pph; Talc = 0—0.15 pph; Indigo = 0—0.07 pph.

** The Federal Specification, [III]-524C, allows less than 2% dimensional change in any direction after exposing foam samples for 7 days at 75°C (167°F) dry or at 70°C (158°F)/97% RH.

[c] Comparative Example.

Table III shows that addition of carbon dioxide to ethyl chloride and dichlorodifluoromethane mixed blowing agent improved the dimensional stability at elevated temperatures which was quite an unexpected result because of its fast permeation rate through polystyrene.

Example 4

The general procedure of Example 1 was repeated with styrene/acrylic acid copolymers (SAA), polystyrene (PS) and PS/SAA blends. A foam suitable for insulation was obtained.

Foam was discharged from the slot die at a rate of about 90.8 kg (250 pounds) per hour. The PS had a $\overline{M}w$ (weight-average molecular weight) of about 200,000; and the SAA was three (3) percent by total weight acrylic acid with a $\overline{M}w$ of about 160,000, unless otherwise noted.

The results are set forth in Table IV.

TABLE IV

Effect of Resin Type on Compressive Strength and Dimensional Stability of Insulation Board[2]

| FC-12 (pph) | EtCl (pph) | $CO_2$ (pph) | Total Blowing Agent (pph) | Resin Type | Density $kg/m^3$ (pcf) | Cell Size (mm) | Aging (days) Prior to Testing | Compressive Strength (psi) Vert | Compressive Strength (psi) Horiz | Compressive Strength (psi) Ext | Dimensional Change (%) after 7 days of exposure at 70°C (158°F) Vert | Dimensional Change (%) Horiz | Dimensional Change (%) Ext |
|---|---|---|---|---|---|---|---|---|---|---|---|---|---|
| 7.0 (57%) | 4.0 (32%) | 1.3 (11%) | 12.3 | SAA | 35.2 (2.23) | 0.35 | 21 | 58.4 | 20.9 | 26.7 | −0.50 | 0.50 | 0.30 |
| 8.0 (52%) | 5.5 (36%) | 1.8 (12%) | 15.3 | SAA | 40.4 (2.49) | 0.30 | 21 | 70.7 | 29.3 | 28.6 | −0.90 | 0.40 | 0.80 |
| 8.0 (71%) | 2.5 (22%) | 0.8 (7%) | 11.3 | SAA | 34.5 (2.13) | 0.35 | 21 | 47.3 | 25.6 | 26.6 | −0.20 | 0.30 | 0.40 |
| 6.0 (49%) | 5.5 (45%) | 0.8 (6%) | 12.3 | SAA | 37.1 (2.29) | 0.42 | 21 | 43.7 | 31.2 | 30.3 | −0.70 | 0.40 | 0.40 |
| 6.0 (49%) | 5.5 (45%) | 0.8 (6%) | 12.3 | 1/2** PS/SAA | 32.9 (2.03) | 0.41 | 21 | 41.5 | 22.2 | 22.4 | −0.50 | 0.20 | 0.50 |
| 7.0 (57%) | 4.0 (32%) | 1.3 (11%) | 12.3 | 2/1** PS/SAA | 35.5 (2.19) | 0.39 | 21 | 54.3 | 21.7 | 22.4 | −0.60 | 0.40 | 0.60 |
| 7.0 (57%) | 4.0 (32%) | 1.3 (11%) | 12.3 | SAA*** | 36.2 (2.23) | 0.40 | 21 | 55.1 | 23.1 | 33.8 | −0.50 | 0.90 | 0.30 |
| 7.0 (57%) | 4.0 (32%) | 1.3 (11%) | 12.3 | PS | 35.2 (2.05) | 0.39 | 21 | 41.7 | 22.9 | 25.7 | −0.10 | 0.70 | 0.70 |
| 8.0 (52%) | 5.5 (36%) | 1.8 (12%) | 15.3 | PS | 35.8 (2.21) | 0.37 | 21 | 43.5 | 27.7 | 31.2 | −1.00 | 1.9 | 0.60 |
| 8.0 (71%) | 2.5 (22%) | 0.8 (7%) | 11.3 | PS | 32.8 (2.02) | 0.41 | 21 | 35.4 | 30.2 | 31.2 | 0.40 | 1.0 | 0.80 |

TABLE IV (continued)
Effect of Resin Type on Compressive Strength and Dimensional Stability of Insulation Board*

| FC-12 (pph) | EtCl (pph) | $CO_2$ (pph) | Total Blowing Agent (pph) | Resin Type | Density kg/m³ (pcf) | Cell Size (mm) | Aging (days) Prior to Testing | Compressive Strength (psi) | | | Dimensional Change (%) after 7 days of exposure at 70°C (158°F) | | |
|---|---|---|---|---|---|---|---|---|---|---|---|---|---|
| | | | | | | | | Vert | Horiz | Ext | Vert | Horiz | Ext |
| 6.0 (49%) | 5.5 (45%) | 0.8 (6%) | 12.3 | PS | 36.6 (2.26) | 0.39 | 21 | 34.8 | 27.5 | 33.0 | −0.40 | 1.4 | 0.60 |
| 8.0 (56%) | 5.5 (38%) | 0.8 (6%) | 14.3 | PS | 32.1 (1.98) | 0.37 | 21 | 35.5 | 18.0 | 24.6 | −0.70 | 1.7 | 0.50 |
| 6.0 (58%) | 2.5 (24%) | 1.8 (18%) | 10.3 | PS | 34.9 (2.15) | 0.39 | 21 | 46.4 | 28.6 | 24.1 | −0.20 | 0.10 | 0.60 |
| 8.0 (65%) | 2.5 (20%) | 1.8 (15%) | 12.3 | PS | 31.6 (1.95) | 0.39 | 21 | 40.3 | 24.3 | 31.5 | 0.03 | 0.90 | 0.20 |
| 6.0 (45%) | 5.5 (41%) | 1.8 (14%) | 13.3 | PS | 33.2 (2.05 | 0.34 | 21 | 41.6 | 25.0 | 26.1 | −0.7 | 0.90 | 0.30 |

* Foaming temperature between 108°C and 133°C; Die pressure ranges between $44.8 \cdot 10^5$ and $55.1 \cdot 10^5$ Pa (650 psi and 800 psi); Calcium stearate = 0.05 pph; Magnesium oxide = 0.05 pph; Copper phthalocyanine blue = 0.03 pph; FR-651P = 0.8 pph.

** Weight ratio of PS/SAA

*** 1 percent by total weight acrylic acid with a $\overline{M}w$ of about 180,000.

(c) Comparative Example.

Table IV shows foam having dimensional stability at an elevated temperature and elevated humidity when utilizing a mixed blowing agent of carbon dioxide, ethyl chloride and dichlorodifluoromethane.

Example 5

The general procedure of Example 1 was again repeated with a PS having a $\overline{M}w$ of about 200,000. Foam was discharged from the slot die at a rate of about 250 pounds per hour.

The results are set forth in Table V.

TABLE V
Effect of Blowing Agent Composition on Crispness of Decorative Billets*

| FC-12 (pph) | ETCI (pph) | $CO_2$ (pph) | Total Blowing Agent (pph) | Polymer Type | Density kg/m³ (pcf) | Cell Size (mm) | Aging (days) Prior to Testing | Compressive Strength (psi) | | | Crispness Test (lbs)** | | |
|---|---|---|---|---|---|---|---|---|---|---|---|---|---|
| | | | | | | | | Vert | Horiz | Ext | Top | Center | Bottom |
| 0 | 9.0 (90%) | 1.0 (10%) | 10.0 | PS | 31.9 (1.97) | 2.36 | 1 | 12.5 | 14.3 | 21.1 | 10.0 | 9.3 | 10.1 |
| 0 | 9.0 (86%) | 1.5 (14%) | 10.5 | PS | 29.5 (1.82) | 1.44 | 1 | 20.4 | 14.1 | 13.5 | 10.1 | 9.8 | 10.0 |
| 0 | 8.0 (89%) | 1.0 (11%) | 9.0 | PS | 34.9 (2.15) | 1.86 | 1 | 17.8 | 18.2 | 17.9 | 10.6 | 10.4 | 11.0 |
| 1.0 (10%) | 8.0 (80%) | 1.0 (10%) | 10.0 | PS | 29.3 (1.81) | 1.80 | 1 | 17.4 | 18.3 | 17.8 | 10.8 | 10.6 | 10.8 |

* Foaming temperature between 108°C and 117°C; Die presure ranges between $18.6\cdot10^5$ and $31.0\cdot10^5$ Pa (270 psi and 450 psi); Calcium stearate = 0.05 pph; Magnesium oxide = 0.05 pph; FR-651P ranges beween 0.64 pph and 1.37 pph.

** Crispness Test — The laboratory crispness test involves a free steel ring and an Instron tensile testing machine. The small ring is forced into a sample of decorative billet at a rate of 12.8 cm/Kgn (5 in/min) for a total of 7.62 mm (0.3 in). The force-penetration is recorded on a strip chart run at 50.8 cm/min (20—30 in/min). The force is read from the chart at a penetration of 2.54 mm (0.1 in). The steel ring has an 19.1 mm (0.75 in) outside diameter and a 17.0 mm (0.670 in) inside diameter. The axial length is not critical but should be at least 0.5 in. The acceptable machinability is obtained if the crispness is between 8.0—11.0.

(c) Comparative Example.

Table V shows that the use of a $CO_2$/EtCl mixture results in a low density, large cell foam suitable for decorative purposes.

Example 6

The general procedure of Example 1 was repeated to obtain a foam suitable for insulation.

The results are set forth in Table VI.

Table VI shows that a small cell, low density insulating foam having good dimensional stability can be obtained when utilizing a mixed blowing agent of carbon dioxide, ethyl chloride and dichlorodifluoromethane in selected amounts.

TABLE VI
Effect of Blowing Agent on Dimensional Stability*

| FC-12 (pph) | EtCl (pph) | $CO_2$ (pph) | Total Blowing Agent (pph) | Density kg/m$^3$ (pcf) | Cell Size (mm) | Aging Prior to Testing (Days) | Dimensional Change (%) at 70°C (158°F) Ambient RH** Vert | Horiz | Ext |
|---|---|---|---|---|---|---|---|---|---|
| 8.9 (74%) | 2.4 (20%) | 0.7 (6%) | 12.0 | 37.1 (2.29) | 0.29 | 1 | 0.2 | 0.3 | 0.7 |
| 10.4 (87%) | 1.2 (10%) | 0.4 (3%) | 12.0 | 42.8 (2.64) | 0.25 | 1 | −0.2 | −0.3 | 0.5 |
| 11.3 (87%) | 1.3 (10%) | 0.4 (3%) | 13.0 | 41.5 (2.56) | 0.22 | 1 | 0.00 | −0.1 | 0.7 |
| 13.0 (87%) | 1.5 (10%) | 0.5 (3%) | 15.0 | 39.4 (2.43) | 0.15 | 1 | −0.9 | 0.2 | 0.3 |

* Foaming Temperature ranges from about 115°C to about 128°C; Die pressure ranges from $41.3 \cdot 10^5$ to $62 \times 10^5$ Pa (600 psi to 900 psi); Barium stearate = 0.15 pph; Copper phthalocyanine blue = 0.03 pph; Tetrasodiumpyrophosphate = 0.06 pph; Hexabromocyclododecane = 1.6 pph.

** TEST CONDITIONS: 48 hours followed by 24 hours at ambient conditions before remeasuring dimensions.

[c] Comparative Example.

**Claims**

1. A process for the preparation of an extruded alkenyl aromatic thermoplastic resinous elongated foam body, the body defining a plurality of closed non-interconnecting gas-containing primary cells therein, the steps of the method including

(1) heat-plastifying an alkenyl aromatic synthetic resinous material

(2) adding to and mixing with the heat plastified synthetic resinous material an amount of 3 to 18 parts per 100 parts of resinous material a fluid blowng agent mixture comprising as a volatile fluid foaming agent ethylchloride and/or a fluorocarbon member such as dichlorodifluoromethane to provide a blowable foaming agent resinous polymer mixture under a pressure sufficiently high that foaming is prevented.

(3) reducing the temperature of the mixture to a temperature such that when pressure is removed therefrom, a foam of desirable quality is obtained,

(4) reducing the pressure on the mixture to thereby cause the mixture to form a foam of desired quality characterized by employing a blowing agent mixture of from 3 to 45 weight percent fluid carbon dioxide, from 5 to 97 weight percent ethyl chloride and from 0 to 90 weight percent of a fluorocarbon member selected from the group consisting of dichlorodifluoromethane, 1-chloro-1,1-difluoroethane and mixtures thereof.

2. The process of claim 1 employing in the blowing agent mixture from 3 to 25 weight percent of carbon dioxide.

3. The process of claim 1 wherein the blowing agent mixture includes from 5 to 60 weight percent of ethyl chloride.

4. The process of claim 1 employing in the blowing agent mixture from 30 to 90 weight percent of the fluorocarbon member.

5. The process of claim 1 employing in the blowing agent mixture from 0 to 30 weight percent of fluorocarbon member.

6. The process of claim 1 wherein the blowing agent mixture includes 3 to 25 weight percent carbon dioxide, 20 to 60 weight percent ethyl chloride and 30 to 90 weight percent of fluorocarbon member.

7. The process of claim 1 employing as a blowing agent mixture 3 to 45 weight percent carbon dioxide, 60 to 90 weight percent ethyl chloride and from 0 to 25 weight percent fluorocarbon member.

8. The process of any of the preceding claims wherein 1-chloro-1,1-difluoroethane is used as fluorocarbon member.

9. The process of any of the preceding claims wherein polystyrene is used as the alkenyl aromatic synthetic resin.

10. The process of any of the preceding claims 1 to 9 wherein the resulting foam has a density in the range of from 16 kg/m$^3$ to 80.2 kg/m$^3$ (1—5 pcf) and a surface smoothness less than 4.

11. The process of any of the preceding claims 1 to 9 wherein the resulting foam has a crispness in the range from 8.0 to 11.0.

12. The process of any of the preceding claims 1 to 9 wherein the resulting foam has less than 2 percent dimensional change in any direction after exposure for 7 days at 70°C (158 °F) and 97 percent relative humidity.

**Patentansprüche**

1. Verfahren zum Herstellen eines extrudierten, langgestreckten Schaumkörpers aus alkenylaromatischem thermoplastischem Harz, wobei im Körper eine Vielzahl von geschlossenen, nicht verbundenen, Gas enthaltenden, primären Zellen vorhanden ist, wobei die Schritte des Verfahrens einschließen

(1) Wärmeerweichen eines alkenylaromatischen, synthetischen, harzartigen Materials,

(2) Hinzufügen und Einmischen in das wärmeerweichte, synthetische, harzartige Material einer Menge von 3 bis 18 Teilen auf 100 Teile harzartigen Materials einer flüssigen Treibmittelmischung, enthaltend als ein flüchtiges, flüssiges Aufschäummittel Ethylchlorid und/oder eine Fluorkohlenstoffverbindung, wie Dichlordifluormethan, um eine Mischung aus treibenden Aufschäummitteln und harzartigem Polymer auszubilden unter einem ausreichend hohen Druck, um Schäumen zu vermeiden,

(3) Verringern der Temperatur der Mischung auf eine Temperatur, so daß bei Druckentlastung ein Schaum erwünschter Qualität erhalten wird,

(4) Verringern des Druckes auf der Mischung, so daß die Mischung einen Schaum erwünschter Qualität ausbildet,

gekennzeichnet durch Verwenden einer Treibmittlelmischung aus 3 bis 45 Gew.-% flüssigem Kohlendioxid, von 5 bis 97 Gew.-% Ethylchlorid und von 0 bis 90 Gew.-% einer Fluorkohlenstoffverbindung, ausgewählt aus der aus Dichlordifluormethan, 1-Chlor-1,1-difluorethan und Mischungen derselben bestehenden Gruppe.

2. Verfahren nach Anspruch 1, dadurch gekennzeichnet, daß die verwendete Treibmittelmischung 3 bis 25 Gew.-% Kohlendioxid enthält.

3. Verfahren nach Anspruch 1, dadurch gekennzeichnet, daß die Treibmittelmischung 5 bis 60 Gew.-% Ethylchlorid enthält.

4. Verfahren nach Anspruch 1, dadurch gekennzeichnet, daß die Treibmittelmischung 30 bis 90 Gew.-% der Fluorkohlenstoffverbindung enthält.

5. Verfahren nach Anspruch 1, dadurch gekennzeichnet, daß die verwendete Treibmittelmischung 0 bis 30 Gew.-% Fluorkohlenstoffverbindung enthält.

6. Verfahren nach Anspruch 1, dadurch gekennzeichnet, daß die Treibmittelmischung 3 bis 25 Gew.-% Kohlendioxid, 20 bis 60 Gew.-% Ethylchlorid und 30 bis 90 Gew.-% Fluorkohlenstoffverbindung enthält.

7. Verfahren nach Anspruch 1, dadurch gekennzeichnet, daß die verwendete Treibmittelmischung 3 bis 45 Gew.-% Kohlendioxid, 60 bis 90 Gew.-% Ethylchlorid und 0 bis 25 Gew.-% Fluorkohlenstoffverbindung enthält.

8. Verfahren nach jedem der vorstehenden Ansprüche, dadurch gekennzeichnet, daß 1-Chlor-1,1-difluorethan als Fluorkohlenstoffverbindung verwendet wird.

9. Verfahren nach jedem der vorstehenden Ansprüche, dadurch gekennzeichnet, daß Polystyrol als das alkenylaromatische, synthetische Harz verwendet wird.

10. Verfahren nach jedem der vorstehenden Ansprüche 1 bis 9, dadurch gekennzeichnet, daß der erhaltene Schaum eine Dichte im Bereich von 16 $kg/m^3$ bis 80,2 $kg/m^3$ (1—5 pcf) und eine Oberflächenglätte von kleiner als 4 aufweist.

11. Verfahren nach jedem der vorstehenden Ansprüche, bis 9, dadurch gekennzeichnet, daß der erhaltene Schaum eine Kräuselung im Bereich von 8,0 bis 11,0 aufweist.

12. Verfahren nach jedem der vorstehenden Ansprüche 1 bis 9, dadurch gekennzeichnet, daß der erhaltene Schaum weniger als 2% Dimensionsänderung in jeder Richtung nach Aussetzen für 7 Tage bei 70°C (158°F) und 97% relativer Luftfeuchte aufweist.

## Revendications

1. Procédé de préparation d'un corps extrudé allongé, en mousse de résine thermoplastique alcényl-aromatique, le corps définissant une pluralité de cellules primaires fermées non communiquantes, contenant un gaz, les étapes du procédé comprenant

(1) la thermoplastification d'une matière résineuse synthétique alcényle-aromatique

(2) l'addition et le mélange, à la matière résineuse synthétique alcényl-aromatique thermoplastifiée, d'une quantité de 3 à 18 parties, pour 100 parties de matière résineuse, d'un mélange d'agents gonflants fuides comprenant, comme agent moussant fluide volatil, le chlorure d'éthyle et/ou un élément fluorocarboné comme le dichlorodifluorométhane, pour donner un mélange gonflable de polymère résineux et d'agent moussant, sous une pression suffisamment élevée pour empêcher le moussage,

(3) la réduction de la température du mélange jusqu'à une température telle que, lorsqu'on cesse d'y appliquer la pression, on obtienne une mousse de qualité souhaitable,

(4) la réduction de la pression sur le mélange pour faire en sorte que le mélange forme une mousse de qualité souhaitée

caractérisé en ce que l'on emploie un mélange d'agents gonflants de 3 à 45% en poids de gaz carbonique fluide, de 5 à 97% en poids de chlorure d'éthyle et de 0 à 90% en poids d'un élément fluorocarboné choisi dans le groupe constitué par le dichlorodifluorométhane, le 1-chloro-1,1-difluoroéthane et leurs mélanges.

2. Procédé selon la revendication 1 employant, dans le mélange d'agents gonflants, de 3 à 25% en poids de gaz carbonique.

3. Procédé selon la revendication 1, dans lequel le mélange d'agents gonflants renferme de 5 à 60% en poids de chlorure d'éthyle.

4. Procédé selon la revendication 1 employant, dans le mélange d'agents gonflants, de 30 à 90% en poids de l'élément fluorocarboné.

5. Procédé selon la revendication 1 employant, dans le mélange d'agents gonflants, de 0 à 30% en poids de l'élément fluorocarboné.

6. Procédé selon la revendication 1, dans lequel le mélange d'agents gonflants renferme 3 à 25% en poids de gaz carbonique, 20 à 60% en poids de chlorure d'éthyle et 30 à 90% en poids d'élément fluorocarboné.

7. Procédé selon la revendication 1, employant, come mélange d'agents gonflants, 3 à 45% en poids de gaz carbonique, 60 à 90% en poids de chlorure d'éthyle et 0 à 25% en poids d'élément fluorocarboné.

8. Procédé selon l'une quelconque des revendications précédentes, dans lequel on utilise le 1-chloro-1,1-difluoroéthane come élément fluorocarboné.

9. Procédé selon l'une quelconque des revendications précédentes, dans lequel on utilise le polystyrène comme résine synthétique alcényle-aromatique.

10. Procédé selon l'une quelconque des revendications 1 à 9, dans lequel la mousse résultante a une masse volumique dans l'intervalle de 16 $kg/m^3$ à 80,2 $kg/m^3$ (1—5 pcf) et un lissé de surface inférieur à 4.

11. Procédé selon l'une quelconque des revendications 1 à 9, dans lequel la mousse résultante a une dureté dans l'intervalle de 8,0 à 11,0.

12. Procédé selon l'une quelconque des revendications 1 à 9, dans lequel la mousse résultante présente une variation dimensionnelle inférieure à 2% dans toutes les directions après une exposition de 7 jours à 70°C (158°F) et à une humidité relative de 97%.